(19) Europäisches Patentamt
European Patent Office
Office européen des brevets

(11) Numéro de publication: **0 161 136**
**A1**

(12) # DEMANDE DE BREVET EUROPEEN

(21) Numéro de dépôt: 85400577.4

(22) Date de dépôt: 26.03.85

(51) Int. Cl.[4]: B 29 C 45/14
A 43 B 5/00, B 29 C 45/16

(30) Priorité: 27.03.84 FR 8404717

(43) Date de publication de la demande: 13.11.85 Bulletin 85/46

(84) Etats contractants désignés: AT CH DE FR GB IT LI NL SE

(71) Demandeur: Ours, Roger
62, Avenue Clarisse
F-92420 Vaucresson(FR)

(72) Inventeur: Ours, Roger
62, Avenue Clarisse
F-92420 Vaucresson(FR)

(74) Mandataire: Tony-Durand, Serge
Cabinet Tony-Durand 22, Boulevard Voltaire
F-75011 Paris(FR)

(54) **Procédé de fabrication de chaussure, moule pour la mise en oeuvre de ce procédé et chaussures ainsi réalisées.**

(57) Le présent procédé et le moule pour sa mise en oeuvre sont destinés à la fabrication d'une chaussure dont la tige et la semelle comportent une couche de matière plastique surmoulée.

Selon le présent procédé, on injecte une couche de matière plastique entre les deux semelles (3 et 4) de deux chaussons (1 et 2) emboîtés l'un dans l'autre et réalisés en cuir ou autre matière appropriée, et ce en plaçant ceux-ci sur une forme métallique intérieure (22) et en disposant l'ensemble à l'intérieur d'un moule, dont la pièce (11) correspondant à la semelle, comporte un canal (12) d'injection de matière plastique. Par ailleurs, on prévoit des trous de passage (8) dans la semelle (4) du chausson externe (2) ainsi qu'une ouverture (9) de plus grande section située en regard du canal (12) d'injection du moule. Ainsi, la matière injectée se répand dans l'intervalle entre les semelle d'usure (23), ou au moins une partie de celle-ci, ou pour assuere la solidarisation de l'ensemble avec une semelle d'usure (32) fabriquée indépendamment et mise en place au préalable dans le moule.

Les chaussures ainsi fabriquées peuvent constituer notamment des chaussures de sport ou des chaussures de protection destinées à être utilisées pour certains travaux.

Fig:6

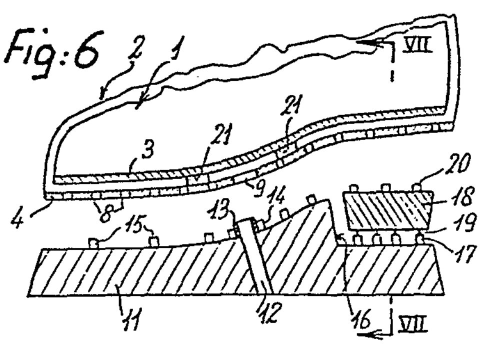

"PROCEDE DE FABRICATION DE CHAUSSURE, MOULE POUR LA MISE EN OEUVRE DE CE PROCEDE ET CHAUSSURES AINSI REALISEES"

La présente invention concerne la fabrication de chaussures, notamment de chaussures de sport à tige haute, telles que des chaussures de patinage, des chaussures de ski ou des chaussures de foot-ball.

Dans le but de renforcer la résistance de certaines parties d'une chaussure et/ou d'en assurer l'étanchéité, il a déjà été proposé de réaliser leur fabrication en prévoyant des parties moulées en matière plastique sur des éléments en cuir, ou tout autre matériau approprié, qui leur servent de supports. Une telle solution a également été proposée dans le but de réduire les coûts de fabrication.

Ainsi, le brevet FR 1 353 780 décrit un procédé de fabrication prévoyant l'injection de matière plastique entre une semelle inférieure d'usure et la première d'une semelle de chaussure, sur laquelle première est déjà fixée la tige de la chaussure correspondante. Toutefois, cette injection de matière plastique est strictement limitée à la semelle et n'intéresse en aucune façon la tige. Il en est de même dans les procédés décrits dans les brevets FR 1 580 513, 2 339 356.

Quant au brevet FR 2 420 312, il décrit une chaussure présentant une coque externe en matière plastique surmoulée sur un chausson intérieur en cuir, la semelle externe d'usure étant moulée en même temps sur une armature de raidissement constituant la coque du contrefort ainsi qu'une fine semelle intermédiaire. Cette chaussure présente des avantages incontestables en ce qui concerne la stabilité de forme et l'étanchéité. Cependant, elle a l'inconvénient d'être relativement lourde et de présenter un aspect peu esthétique du fait de la présence très apparente de la coque externe en matière plastique.

Dans un tout autre ordre d'idées, le brevet FR 2 493 112 décrit un procédé de fabrication d'un chausson

destiné à être placé à l'intérieur d'une chaussure de ski. Conformément à ce procédé, ce chausson est réalisé en injectant une mousse de matière plastique entre une chaussette interne en tissu et une chaussure externe constituée par un film extensible mince en polyuréthane. L'injection prévue s'effectue à partir d'un orifice prévu sur le dessus de la chaussette externe et la couche ainsi injectée est uniforme, et de même nature, à l'endroit de la partie supérieure du chausson et à l'endroit de la partie correspondant à la semelle. Il n'y a donc pas réalisation d'une réelle semelle pouvant s'apparenter à la semelle d'une chaussure. Ceci n'est du reste pas le but visé par le procédé en cause qui concerne uniquement la réalisation d'un chausson intérieur destiné à constituer en quelque sorte un coussin amortisseur de protection autour du pied.

En conséquence, les divers procédés rappelés ci-dessus ne sont en aucune façon applicables pour la fabrication d'une chaussure à tige haute dont la semelle et la tige doivent être toutes deux renforcées, à l'exception toutefois du procédé selon le brevet FR 2 430 312. Mais, celui-ci comporte les graves inconvénients mentionnés précédemment.

C'est pourquoi, la présente invention a pour but de proposer un procédé de fabrication permettant de bénéficier des avantages de surmoulage d'une couche de matière plastique sans avoir à subir les inconvénients des chaussures actuelles de ce genre. A cet effet ce procédé est oonçu de manière à permettre l'obtention d'une chaussure ayant l'aspect d'une chaussure normale en cuir et dans laquelle tout risque de décollement de la couche moulée en matière plastique se trouve exclu.

Le procédé selon l'invention est caractérisé en ce que :

- on réalise deux chaussons à tige haute en cuir, ou autre matériau approprié, dont l'un est, en tous points, de dimensions supérieures à l'autre, et comporte dans sa semelle une ouverture destinée à l'injection de matière

plastique,

- puis, après avoir emboîté le chausson de moindres dimensions à l'intérieur de l'autre et avoir placé une forme métallique dans le chausson interne, on dispose l'ensemble à l'intérieur d'un moule dont la pièce correspondant à la semelle, comporte un canal d'injection de matière plastique débouchant en regard de l'ouverture de la semelle du chausson externe,

- ensuite, on procède à l'injection de matière plastique à travers le canal d'injection, de sorte que la matière injectée se répande dans l'intervalle entre les deux semelles et les deux tiges des deux chaussons, pour que les diverses parties de la chaussure réalisée soient constituées par la combinaison de deux couches en cuir, ou autre matière appropriée, renfermant entre elles une couche de matière plastique.

Selon une autre caractéristique du présent procédé, on réalise, tout ou partie de la semelle externe par moulage en matière plastique en ménageant des trous de passage dans la semelle du chausson externe et en prévoyant un intervalle ou une cavité appropriée de moulage dans le pavé de fermeture de l'extrémité correspondante du moule. Cependant, la semelle externe peut aussi être réalisée lors d'une seconde opération de moulage, ou être constituée par une semelle moulée au préalable et mise en place dans le moule pour se trouver solidarisée avec la semelle du chausson externe grâce à la matière plastique passant dans les trous ménagés dans cette semelle.

La présente invention a également pour objet un moule spécialement conçu pour la mise en oeuvre du présent procédé ainsi que les chaussures obtenues grâce à celui-ci.

Ces chaussures sont donc caractérisées par le fait que leur tige, de même que leur semelle, sont constituées par la combinaison de deux couches en cuir, ou autre matière appropriée, renfermant entre elles une couche de matière plastique, une autre couche de matière plastique pouvant être surmoulée contre la face inférieure de la semelle composite ainsi réalisée afin de constituer une semelle externe d'usure.

Cependant, d'autres particularités et avantages de l'objet de l'invention apparaîtront au cours de la description suivante. Celle-ci est donnée en référence aux dessins annexés à simple titre indicatif, et sur lesquels:

Les figures 1 et 2 sont des vues en perspective des deux chaussons en cuir, ou autre matière appropriée, entre lesquels est injectée une couche de matière plastique;

La figure 3 est une vue en coupe de détail selon la ligne III-III de la figure 2 ;

La figure 4 est une vue en plan de dessous de la semelle du chausson extérieur ;

La figure 5 est une vue en élévation de côté de la forme métallique prévue à l'intérieur du moule utilisé pour la mise en oeuvre du présent procédé ;

La figure 6 est une vue en coupe longitudinale illustrant la mise en place des deux chaussons, en cuir ou autre matière appropriée, sur la pièce du moule qui correspond à la semelle de la chaussure ;

La figure 7 est une vue en coupe transversale du moule utilisé, selon un plan de coupe correspondant à la ligne VII-VII de la figure 6, cette vue illustrant la mise en oeuvre du présent procédé, juste avant l'opération d'injection de la matière plastique ;

La figure 8 est une vue en perspective d'une chaussure obtenue par mise en oeuvre du présent procédé ;

La figure 9 est une vue en coupe transversale selon la ligne IX-IX de la figure 8 ;

La figure 10 est une vue en coupe selon la ligne X-X de la figure 9 ;

La figure 11 est une vue en élévation, avec arrachement, de l'extrémité arrière d'une chaussure selon l'invention, celle-ci correspondant à une variante de réalisation ;

La figure 12 est une vue en élévation de côté de la forme métallique particulière qui est prévue à l'intérieur du moule pour la réalisation d'une telle variante;

La figure 13 est une vue similaire à la figure

6, mais qui illustre une seconde forme de mise en oeuvre du procédé selon l'invention ;

La figure 14 est une vue partielle en coupe transversale de la chaussure obtenue dans ce cas, cette vue correspondant à une coupe selon la ligne XIV-XIV de la figure 13 ;

La figure 15 est une vue en coupe similaire aux figures 6 et 13, mais qui illustre une troisième forme de mise en oeuvre du procédé selon l'invention ;

La figure 16 est une vue similaire qui illustre la seconde opération de moulage réalisée dans cette forme particulière de mise en oeuvre ;

La figure 17 est une vue en perspective de la semelle pouvant être prévue dans ce cas pour le chausson externe, cette semelle étant en matière plastique moulée;

La figure 18 est une vue partielle en coupe transversale selon la ligne XVIII-XVIII de la figure 16 ;

La figure 19 est une vue partielle en coupe transversale de la chaussure ainsi obtenue.

Comme déjà indiqué, la mise en oeuvre du procédé selon l'invention implique l'utilisation de deux chaussons en cuir, ou autre matière appropriée, à savoir : un premier chausson intérieur 1 et un second chausson extérieur 2 présentant des dimensions légèrement supérieures au premier, de façon que ces deux chaussons puissent être emboîtés l'un dans l'autre.

Chacun de ces chaussons est constitué par une tige et une semelle, respectivement 3 pour la semelle du chausson intérieur 1 et 4 pour la semelle du chausson extérieur 2. Chacune de ces semelles est solidarisée avec le bord inférieur de la tige correspondante par couture bord à bord par un point de surjet ou un point dit de "Ströbel". Pour éviter que la couture prévue autour de la semelle 4 du chausson extérieur soit ultérieurement visible, il convient que la ligne de couture correspondante soit légèrement décalée vers l'intérieur.

La tige de chacun de ces chaussons est constituée

par deux parties supplémentaires, respectivement 5 pour le chausson intérieur et 6 pour le chausson extérieur. A l'arrière, ces deux parties sont réunies bord à bord par une couture de surjet ou similaire. Toutefois, une bande de recouvrement 7 est rapportée sur la couture prévue à l'arrière de la tige du chausson extérieur. A l'avant, les deux parties complémentaires 5 de la tige du chausson intérieur sont réunies bord à bord de la même façon. Par contre, à cet endroit, les bords correspondants 7 des deux parties complémentaires 6 de la tige du chausson extérieur sont repliés vers l'intérieur et cousus l'un contre l'autre, comme représenté à la figure 3.

La semelle 4 du chausson extérieur 2 comporte une multitude de petites perforations 8 réparties sur toute sa surface et qui sont susceptibles de servir de passages pour la matière plastique lors de l'injection de celle-ci. Cependant, cette semelle présente également une plus large ouverture 9 destinée à permettre l'injection de matière plastique entre les semelles des deux chaussons 1 et 2.

Le moule utilisé pour la mise en oeuvre du présent procédé comporte deux pièces symétriques 10 se raccordant selon un plan de joint X-Y et une troisième pièce 11, dénommée "pavé", qui correspond à la semelle de la chaussure. Quant aux deux pièces 10, elles correspondent à la tige de celle-ci ainsi qu'à l'entourage de sa semelle.

Le pavé 11 de ce moule comporte un canal d'injection 12 débouchant dans une buse 13 prévue en saillie sur sa face interne. La position de l'ouverture 9 de la semelle 4 du chausson extérieur est telle que celle-ci puisse être emboîtée sur cette buse. Cependant, une collerette 14 est prévue autour de cette dernière pour maintenir la semelle 4 écartée par rapport à la face interne du pavé 11 du moule. De plus, une série de plots 15 sont également prévus en saillie sur la face interne de ce pavé pour maintenir la semelle 4 écartée de celui-ci d'une distance qui correspondra ultérieurement à l'épaisseur de la semelle d'usure en matière plastique résultant de l'injection d'une telle matière à l'intérieur du moule.

A sa partie arrière, le pavé 11 comporte un décrochement 16 correspondant au talon de la chaussure. A cet endroit la face supérieure de ce pavé porte une série de plots saillants 17 destinés à recevoir un bloc 18 de remplissage du talon, lequel est avantageusement en matière particulièrement dure. Les plots 17 jouent le même rôle que les plots 15 en maintenant le bloc 18 écarté de la face supérieure du pavé 11 du moule. Cependant, ces plots peuvent avantageusement être munis de picots 19 destinés à s'engager dans des trous borgnes prévus en correspondance dans le bloc 18 de remplissage. Ceci permet d'éviter tout déplacement intempestif de ce bloc sous l'effet de la pression de la matière plastique, lors de l'injection de celle-ci à l'intérieur du moule.

A ce sujet, il convient de noter que la semelle 4 du chausson extérieur 2 se trouve elle-même empêchée de se déplacer à ce moment par le fait que son ouverture 9 est emboîtée sur l'extrémité supérieure de la buse 13 d'injection. Par ailleurs, cette semelle se trouve tenue, sur toute sa périphérie, par les parois internes des deux parties complémentaires 10 du moule.

La face supérieure du bloc 18 de remplissage porte plusieurs plots saillants 20 destinés à jouer le même rôle que les plots 15 du pavé 11. En effet, ces plots 20 ont pour but de maintenir l'arrière de la semelle écartée du bloc de remplissage 18 pour permettre le passage de matière plastique entre ces deux pièces.

De préférence, des cales d'écartement 21 peuvent être disposées, dans le même but, entre les semelles 3 et 4 des deux chaussons 1 et 2. Il est en particulier avantageux de prévoir de telles cales de part et d'autre, ou autour, de l'ouverture 9 à travers laquelle s'effectue l'injection de matière plastique. Cependant, aux autres endroits de telles cales d'écartement ne sont pas indispensables, car l'importance de la pression d'injection de la matière plastique suffit pour que celle-ci se répande entre les

deux semelles 3 et 4, ainsi qu'entre les deux tiges 5 et 6 des deux chaussons. Après emboîtement de ces chaussons l'un dans l'autre et leur mise en place sur la forme métallique 22 représentée à la figure 5, l'ensemble est disposé à l'intérieur du moule, comme représenté à la figure 7. A ce sujet, il convient de noter que la face inférieure de la forme 22 peut porter des fiches destinées à traverser les semelles des deux chaussons 1 et 2 pour éviter tout déplacement intempestif de celles-ci lors de l'opération d'injection. La matière plastique injectée est refoulée sous pression à travers le canal 12 et la buse 13. Cette matière se répand ainsi dans l'intervalle existant entre les deux chaussons 1 et 2 à la fois à l'endroit des semelles de ceux-ci et à l'endroit de leurs tiges, jusqu'au bord supérieur de celles-ci.

Cependant, du fait de la présence des perforations 8 dans la semelle 4 du chausson extérieur, la matière plastique s'écoule au-dessous de cette semelle pour remplir l'espace existant entre celle-ci et le pavé 11 du moule. La couche de matière plastique ainsi coulée à cet endroit vient former une semelle d'usure 23. A l'arrière cette couche de matière plastique vient enfermer le bloc de remplissage 18 en constituant le talon 24 de la chaussure.

La semelle 23 ainsi obtenue est parfaitement solidaire de la semelle 4 du chausson extérieur 2, du fait même de la liaison existant avec la couche de matière plastique située entre les deux semelles 3 et 4, en raison des multiples éléments de jonction 25 moulés à l'intérieur des trous de passage 8 de la semelle 4. Dans ces conditions, il ne risque en aucune façon de se produire un décollement intempestif de la semelle d'usure par rapport aux semelles des deux chaussons 1 et 2.

Bien entendu, la présence des plots 15 et 17, sur le dessus du pavé 11, a pour effet de former de légers creux sur la surface de la semelle d'usure moulée en matière plastique. Cependant, dans la majeure partie des cas, de

tels creux ne constituent pas un inconvénient. De plus, s'il est besoin de faire disparaître ces creux, il est possible de surmouler ensuite une fine semelle externe d'usure.

Quant à la couche 26 de matière plastique, qui est injectée entre les tiges des deux chaussons 1 et 2, elle se trouve étroitement enfermée entre celles-ci. Pour assurer une parfaite solidarisation de cette couche de matière plastique avec les deux couches de cuir, qui se trouvent situées de part et d'autre, on enduit au préalable les faces correspondantes des tiges des deux chaussons avec une colle susceptible d'être activée sous l'effet de la chaleur dégagée par la matière plastique au moment de son injection.

Dans ces conditions, après injection de la matière plastique, les tiges des deux chaussons sont parfaitement solidarisées avec la couche intermédiaire 26 et ces trois couches forment un ensemble absolument homogène qui ne risque pas d'être dissocié. Du reste, les risques de décollement intempestif de ces couches, les unes par rapport aux autres, se trouvent radicalement supprimés du fait que la couche 26 en matière plastique est enfermée entre les deux couches en cuir constituées par les tiges des deux chaussons 1 et 2.

L'intervalle laissé libre, entre les parois intérieures du moule et la paroi extérieure de la forme métallique intérieure 22, présente des épaisseurs variables, de façon à comporter une plus grande épaisseur dans certaines zones correspondant à des parties de la chaussure qui doivent être rendues plus rigides que d'autres. Ainsi, dans le cas des chaussures de patinage, il convient que la coque du contrefort arrière, ainsi que la partie arrière de la tige, soient plus rigides que le reste. Dans ces conditions, il est prévu une épaisseur accrue par l'intervalle en cause dans les zones corespondantes, ce qui permet de conserver une certaine flexibilité dans les autres parties de la chaussure.

Bien entendu l'emplacement des zones ainsi renforcées varie selon la nature et la destination des chaussures

à fabriquer, par exemple des chaussures de sport, ou bien encore des chaussures de sécurité pour certains travaux particuliers.

En réduisant l'importance de l'épaisseur de l'intervalle, laissé libre entre les pièces du moule et la forme intérieure 22, il est possible d'assurer un contact étroit des tiges des deux chaussons sur les bords extérieurs de ces tiges. Comme représenté sur la figure 10, les bords correspondants 27 des deux tiges sont alors en contact direct sans interposition de matière plastique, la couche intermédiaire 26 ne pouvant pas s'étendre à cet endroit. Il suffit ensuite de découper les bords 27 des deux tiges en cuir pour mettre au net la tranche correspondante de la tige de la chaussure. Il convient de noter que la variation d'épaisseur de la couche intermédiaire 26 en matière plastique peut également être obtenue en amincissant certaines parties des tiges des deux chaussons 1 et 2. En effet, dans un tel cas, on obtient également un accroissement d'épaisseur de la couche en matière plastique dans les zones correspondantes.

Les chaussures réalisées au moyen du procédé selon l'invention ont l'avantage de présenter l'aspect extérieur de chaussures normales en cuir, tout en possédant une couche de renforcement en matière plastique. Ceci est un avantage important, notamment au point de vue psychologique, car de nombreux utilisateurs répugnent à acquérir des chaussures ayant l'aspect de chaussures entièrement moulées en matière plastique. Cependant, les chaussures selon l'invention ont également l'avantage de comporter une doublure en cuir, constituée par le chausson intérieur 1, et qui assure un très bon confort du pied.

Bien entendu, la présence de la couche intermédiaire en matière plastique et de la semelle d'usure, également moulée en matière plastique, permet de conférer à la présente chaussure une grande stabilité de forme. Ceci est un avantage essentiel dans le cas de nombreuses chaussures

de sport. Ainsi dans le cas des chaussures de patinage, une telle stabilité de forme permet une meilleure conduite des patins. Le même avantage se retrouve dans le cas de chaussures de ski, ou bien encore dans celui des chaussures de football. Un autre avantage encore du procédé de fabrication selon l'invention découle de ce que, lors de l'injection de la couche intermédiaire 26 en matière plastique, la pression de celle-ci applique fortement la face externe la tige du chausson extérieur 2 contre la paroi interne des pièces 10 du moule. Or, ceci a pour effet de faire disparaître tout défaut de surface sur la tige du chausson extérieur et de lisser cette surface. On obtient donc de la sorte un très bel aspect extérieur de la tige de la chaussure et ce, même si le chausson extérieur de celle-ci est réalisé à partir d'un cuir de qualité médiocre. Ceci permet donc de réduire les frais de fabrication en utilisant des cuirs de moins bonne qualité.

Cependant, le phénomène mentionné ci-dessus permet également d'imprimer, sur la surface extérieure de la tige de la chaussure, tout dessin ou toute marque voulue. Ainsi, il est possible de faire apparaître des dessins figurant des lignes de piqures 28 le long des oeillets de laçage 29.

A ce sujet, il convient de noter que ces derniers peuvent être formés, lors du moulage, par des picots saillants prévus à l'intérieur du moule et destinés à s'engager dans des trous ménagés au préalable sur les tiges des deux chaussons 1 et 2. Du reste, de tels picots ont également l'avantage d'assurer l'immobilisation parfaite des tiges des deux chaussons pour éviter leur déplacement intempestif sous l'effet de la pression de la matière plastique lors de son injection.

La figure 11 représente une variante de réalisation de la chaussure selon l'invention qui est conçue de façon à améliorer encore le confort de celle-ci. A cet effet il est prévu, à l'endroit des malléoles, un tampon 30 en mousse de caoutchouc ou de matière plastique qui est rapporté contre la face externe de la tige du chausson intérieur correspondant 2a. Les tempons ainsi prévus peuvent alors être fixés par tout moyen approprié, tel que collage ou couture. Dans un tel cas la forme métallique 22a, placée à l'intérieur des deux chaussons en cuir, doit elle-même comporter une légère dépression 31 sur chacun de ces côtés afin de loger en quelque sorte la surépaisseur dûe à la présence des tampons 30 sans diminuer l'épaisseur de l'intervalle laissé libre entre les tiges des deux chaussons.

On peut de la sorte conserver une épaisseur relativement importante pour la couche intermédiaire 26a en matière plastique tout en prévoyant deux tampons élastiques 30 permettant d'éviter tout risque de blessure ou de gêne, dû à la rigidité des parois latérales de la tige de la chaussure.

Les risques 13 et 14 illustrent une seconde forme de mise en oeuvre du procédé selon l'invention. Dans celle-ci la semelle d'usure de la chaussure est constituée par une semelle 32 fabriquée indépendamment. Cette semelle est alors moulée auparavant en une matière plastique de même nature que celle injectée par la suite entre les deux chaussons 1b et 2b de la chaussure correspondante. Ceci est une condition essentielle pour que la matière plastique injectée vienne fusionner et faire corps avec la matière de la semelle 32 ainsi prévue. Cependant, tout en étant de même nature, la matière de cette semelle est choisie de façon à comporter une plus grande rigidité que la matière injectée ultérieurement entre les deux chaussons de la chaussure. Ainsi on peut obtenir une plus grande rigidité de la semelle sans que cela nuise à la flexibilité des autres parties de la chaussure.

La semelle 32 ainsi prévue présente de préférence un rebord d'entourage 33. A l'arrière, elle porte un talon creux 34 dont la cavité renferme un large plot saillant 35 destiné à limiter la quantité de matière plastique ultérieurement injectée dans ce talon.

Enfin, cette semelle présente une ouverture 36

destinée à être placée en correspondance du canal 12b d'injection prévu dans le pavé 11b du moule correspondant.

Quant aux deux chaussons 1b et 2b utilisés dans ce cas particulier, ils sont absolument identiques aux chaussons 1 et 2 employés précédemment. En conséquence, la semelle 4b du chausson extérieur 1b comporte une multitude de perforations 8b ainsi qu'une plus large ouverture 9b destinée à être placée en correspondance de l'ouverture 36 de la semelle 32 et par suite, en regard du canal d'injection 12b.

De préférence, des cales 21b sont disposées entre les semelles 3b et 4b des deux chaussons de façon à les maintenir écartés, tout au moins à l'endroit de l'ouverture d'entrée 9b de la matière plastique injectée.

Lors de son injection, celle-ci se répand comme précédemment entre les tiges des deux chaussons pour former une couche intermédiaire 26b. De même que dans le cas précédent, cette matière traverse également les trous 8b de la semelle 4b du chausson extérieur. Cependant, au lieu de former une semelle d'usure au-dessous de celle-ci, la matière plastique, qui s'écoule à travers ces trous, vient fusionner avec la matière de la semelle 32 préalablement mise en place dans le moule. Il y a ainsi soudure intime de la matière plastique injectée avec celle de la semelle externe 32. Dans ces conditions, la solidarisation de celle-ci avec les autres parties de la chaussure est assurée de façon aussi parfaite que dans le cas précédent.

Du reste, la chaussure ainsi obtenue présente les mêmes avantages que précédemment, de sorte qu'il est inutile de rappeler ceux-ci.

Les figures 15 à 19 illustrent une troisième forme de réalisation de l'invention. Dans celle-ci la semelle 4c du chausson externe 2c est constituée par une pièce moulée en matière plastique qui comporte un rebord périphérique 43 faisant saillie vers le bas. Le bord inférieur de la tige 2c de ce chausson est fixée sur ce rebord 43 par une ligne de couture 44. Cependant, à sa partie arrière, le bord inférieur de la tige du chausson externe 2c présente

une extension 45 formant une sorte de jupe autour de l'emplacement prévu pour le talon.

La semelle moulée 4c ne présente des trous de passage 8c qu'à l'arrière, à l'endroit du talon. En plus de ces trous, cette semelle comporte toujours une ouverture 9c pour l'injection de matière plastique entre les deux chaussons 1c et 2c. De plus, la semelle moulée 4c porte, sur sa face supérieure, des plots 21c, aptes à maintenir l'écartement voulu entre les semelles des deux chaussons, ainsi qu'un collet 37 autour de l'ouverture 9c, des fentes 38 étant ménagées dans ce collet pour le passage de la matière plastique lors de son injection (voir figure 17).

Pour l'opération d'injection d'une couche intermédiaire 26c de matière plastique entre les deux chaussons, on ferme le fond du moule avec un pavé 11c qui s'applique contre la semelle 4c du chausson externe en réservant, à l'arrière, une cavité 39 apte à former un noyau 40 pour le talon et ce, avec la matière plastique passant à travers les trous 8c. A l'issue de cette opération la chaussure est donc dépourvue d'une semelle d'usure.

On procède donc ensuite au surmoulage d'une telle semelle en une matière plastique plus rigide que celle injectée entre les deux chaussons 1c et 2c. Pour cette opération on peut utiliser le même moule, mais en remplaçant le pavé 11c par un pavé 11d réservant un espace 41 pour mouler la semelle d'usure et un autre espace 42 pour mouler le corps du talon autour du noyau intérieur 40 réalisé précédemment. De préférence la matière plastique injectée lors de cette seconde opération est de même nature que celle constituant la semelle 4c du chausson externe 2c ; mais il s'agit de compositions de rigidité différentes. Ainsi la matière de la semelle d'usure vient fusionner avec celle de la semelle 4c du chausson externe pour faire intimement corps avec celle-ci.

Il faut noter que lors de cette seconde opération de surmoulage, la jupe inférieure 45 de la tige du chausson

externe 2c se trouve à l'intérieur de la cavité 42 du moule comme représenté sur la figure 18. Dans ces conditions, après cette opération, cette jupe est noyée dans le bloc 24c de matière plastique qui constitue le talon (voir figure 19).

Cette troisième forme de réalisation a pour avantage de permettre de prévoir une matière plastique relativement flexible entre les deux chaussons 1c et 2c, et une matière rigide pour constituer la semelle d'usure. Ceci a également pour avantage de faciliter la fixation d'accessoires éventuels sur la semelle de la chaussure, par exemple un patin, s'il s'agit d'une chaussure de patinage, ou des crampons s'il s'agit d'une chaussure de foot-ball. Par ailleurs, la résistance et la rigidité de la semelle sont encore accrues par le fait que la semelle 4c du chausson externe 2c est constituée par une pièce moulée en matière plastique et que celle-ci est pourvue d'un rebord 43. De plus, la solidarisation de la tige avec la semelle est elle-même considérablement améliorée par la fait que le chausson externe 2c comporte une jupe inférieure 45 qui se trouve noyée à l'intérieur du bloc moulé 24c constituant le talon.

La mise en oeuvre de cette variante du procédé de fabrication selon l'invention ne soulève pas de difficultés particulières, car on peut utiliser un moule du type de ceux destinés à des surmoulages en deux temps pour injecter des matières plastiques en deux couleurs différentes.

Il convient de noter que dans l'une et l'autre des trois formes de mise en oeuvre décrites ci-dessus, le procédé selon l'invention se différencie complètement des procédés antérieurs de fabrication prévoyant simplement le surmoulage d'une couche de matière plastique autour d'un chausson unique de cuir. Du reste, ces procédés antérieurs ne pouvaient en aucune façon suggérer un tel procédé, car les problèmes techniques en cause sont tout à fait différents.

En effet l'injection de matière plastique autour d'un chausson intérieur en cuir ne soulève aucune difficulté particulière, la surface de la couche injectée étant moulée par la paroi interne du moule, cependant que son épaisseur est déterminée par le jeu laissé libre autour du chausson en cuir. Par contre la mise au point du procédé selon l'invention impliquerait d'imaginer une injection de matière plastique entre deux couches de cuir en surmontant le préjugé selon lequel la matière plastique ne pourrait pas se répandre entre celles-ci. Or, il est apparu que, contre toute attente, une pression d'injection, de valeur suffisamment élevée, suffit pour que la matière plastique puisse se répandre entre les deux couches de cuir en les écartant.

Compte tenu de ses avantages, le procédé selon l'invention est particulièrement avantageux pour la fabrication de chaussures de sport à tige haute. Cependant, il peut également être utilisé pour la fabrication de tous autres types de chaussures.

REVENDICATIONS

1 - Procédé de fabrication d'une chaussure dont la tige et la semelle comportent une couche de matière plastique surmoulée sur un chausson intérieur en cuir, ou autre matière similaire à l'intérieur duquel est placée une forme métallique de remplissage pendant l'opération de surmoulage, caractérisé en ce que :

- on réalise deux chaussons à tige haute (1 et 2) en cuir, ou autre matériau approprié, dont l'un est en tous points, de dimensions supérieures à l'autre, et comporte dans sa semelle (4) une ouverture (9) destinée à l'injection de matière plastique,

- puis, après avoir emboîté le chausson (1) de moindres dimensions à l'intérieur de l'autre (2) et avoir placé une forme métallique (22) dans le chausson interne (1), on dispose l'ensemble à l'intérieur d'un moule dont la pièce (11) correspondant à la semelle, comporte un canal (12) d'injection de matière plastique débouchant en regard de l'ouverture (9) de la semelle (4) du chausson externe (2),

- ensuite, on procède à l'injection de matière plastique à travers le canal (12), de sorte que la matière injectée se répande dans l'intervalle entre les deux semelles et les deux tiges des deux chaussons, pour que les diverses parties de la chaussure réalisée soient constituées par la combinaison de deux couches en cuir, ou autre matière appropriée, renfermant entre elles une couche de matière plastique.

2 - Procédé selon la revendication 1, caractérisé en ce que l'on dispose, entre les semelles (3 et 4) des deux chaussons (1 et 2), des cales d'écartement (21), destinées à les maintenir écartées, notamment à proximité de l'ouverture (9), prévue dans la semelle (4) du chausson externe (2) pour l'entrée de la matière plastique injectée.

3 - Procédé selon la revendication 1 ou 2, caractérisé en ce que l'on prévoit, dans la semelle (4) du chausson externe (2) un ou plusieurs trous (8), sur tout ou partie de celle-ci, pour permettre le passage de matière plastique sous celle-ci lors de l'opération d'injection afin de constituer une partie au moins de la semelle externe de la chaussure, un intervalle ou une cavité de moulage étant prévue en correspondance dans le pavé (11) fermant l'extrémité respective du moule.

4 - Procédé selon la revendication 3, caractérisé en ce que l'on pratique des trous de passage (8) sur toute la surface de la semelle (4) du chausson externe (2) et l'on prévoit, sur la surface du pavé (11) du moule correspondant à la semelle, une série de plots (15) destinés à réserver un intervalle correspondant à l'épaisseur d'une semelle d'usure formée par injection de matière plastique.

5 - Procédé selon la revendication 4, caractérisé en ce qu'à l'endroit du talon, on dispose dans le moule un bloc de remplissage (18) en prévoyant des plots d'écartement (17 et 20) à la fois au-dessous et au-dessus de celui-ci, de façon que ce bloc soit noyé dans la matière plastique moulée à cet endroit.

6 - Procédé selon l'une des revendications 1 et 2, caractérisé en ce que l'on prévoit des trous (8b) sur toute la surface de la semelle (4b) du chausson externe (2b) et en ce qu'avant mise en place des deux chaussons (1b et 2b), on dispose contre le pavé (11), qui ferme l'extrémité correspondante du moule, une semelle d'usure (32) préalablement fabriquée en une matière plastique de même nature que celle injectée par la suite, de sorte que, lors de cette injection ultérieure, la matière plastique passant à travers les trous (8b) de la semelle (4b) du chausson externe (2b) vient fusionner avec celle de cette semelle d'usure (32) pour faire corps avec elle.

7 - Procédé selon la revendication 3, caractérisé en ce que les trous de passage (8c) prévus dans la semelle (4c) du chausson externe sont localisés à l'endroit du talon et, pour l'opération d'injection de matière plastique entre les deux chaussons, on prévoit dans le fond du moule un pavé (11c) s'appliquant contre la semelle (4c) du chausson

externe en réservant, à l'endroit du talon, une cavité (39) apte à former un noyau central pour le talon de la chaussure, après quoi on effectue une seconde opération d'injection pour surmouler une semelle d'usure en une matière plastique plus rigide qui, à l'arrière, vient envelopper le noyau (40) du talon en formant un bloc moulé (24c).

8 - Procédé selon la revendication 7, caractérisé en ce que pour constituer la semelle du chausson externe (2c), on utilise une pièce (4c) moulée en matière plastique dont la face supérieure porte des plots (21c) aptes à maintenir l'écartement voulu avec la semelle (3c) du chausson interne (1c), et dont la périphérie comporte un rebord (43) faisant saillie vers le bas et sur lequel on vient fixer par couture le bord inférieur de la tige du chausson externe (2c).

9 - Procédé selon la revendication 8, caractérisé en ce que l'on prévoit, à la partie inférieure de la tige du chausson externe (2c), une jupe (45) faisant saillie vers le bas et, lors de la seconde opération de surmoulage, prévue pour réaliser la semelle externe d'usure et le corps du talon, cette jupe (45) se trouve noyée à l'intérieur du bloc moulé (24c) constituant le corps du talon.

10 - Moule pour la mise en oeuvre du procédé de fabrication selon l'une des revendications précédentes, caractérisé en ce que la pavé (11) de celui-ci, qui ferme son extrémité correspondant à la semelle de la chaussure à réaliser, comporte un canal d'injection (12) situé en regard de l'emplacement de l'ouverture (9) prévue dans la semelle du chausson externe de l'ensemble placé dans ce moule, et en ce que l'intervalle, prévu entre la forme métallique intérieure (22) et les pièces complémentaires (10) de ce moule, présente une épaisseur accrue dans certaines zones correspondant à des parties de la chaussure pour lesquelles il est prévu une plus grande rigidité.

11 - Moule pour la mise en oeuvre du procédé selon l'une des revendications 4 et 5, caractérisé en ce que le pavé (11) de celui-ci, qui correspond à la semelle, porte une série de plots (15) aptes à écarter la semelle (4) du

chausson externe (2) d'une distance correspondant à l'épaisseur de la semelle d'usure à réaliser par injection de matière plastique.

12 - Moule pour la mise en oeuvre du procédé selon l'une des revendications 7 à 9, caractérisé en ce qu'il comporte deux pavés distincts (11c, 11d) destinés à former le fond de ce moule, respectivement lors de la première et lors de la seconde opération d'injection de matière plastique, le premier pavé (11c) étant apte à s'appliquer contre la semelle (4c) du chausson externe en réservant à l'arrière une cavité (39) pour le moulage d'un noyau pour le talon, cependant que le second pavé (11d) est apte à réserver un espace (41-42) pour le moulage d'une semelle d'usure ainsi que du talon.

13 - Chaussure fabriquée par mise en oeuvre du procédé selon l'une des revendications 1 à 9 caractérisé en ce que sa tige est constituée par la combinaison des tiges de deux chaussons (1 et 2), en cuir ou tout autre matière appropriée, emboîtés l'un dans l'autre et d'une couche (26) de matière plastique injectée entre les tiges de ces deux chaussons, cependant que la semelle est formée par la combinaison des semelles (3 et 4) de ces mêmes chaussons et d'une couche de matière plastique injectée entre celle-ci.

14 - Chaussure selon la revendication 13 résultant de la mise en oeuvre du procédé selon l'une des revendications 4 et 5, caractérisée en ce qu'elle comporte une semelle d'usure (23) constituée par une couche de matière plastique moulée contre la semelle (4) du chausson externe (2), cette matière passant à travers les trous (8) de cette semelle et faisant ainsi corps avec la matière plastique injectée entre les semelles (3 et 4) des deux chaussons (1 et 2).

15 - Chaussure selon la revendication 13 résultant de la mise en oeuvre du procédé selon la revendication 6, caractérisée en ce qu'elle comporte une semelle d'usure (32) fabriquée indépendamment, et solidarisée avec les semelles (3b et 4b) des deux chaussons (1b et 3b) par l'intermédiaire des éléments de jonction en matière plastique moulés à l'intérieur des trous de passage (8b) prévus dans la semelle (4b) du chausson externe (2b).

16 - Chaussure selon la revendication 13, résultant de la mise en oeuvre du procédé selon l'une des revendications 7 à 9, caractérisée en ce qu'elle comporte une semelle d'usure surmoulée en une matière plastique plus rigide que celle injectée entre les deux chaussons (1c et 2c) et qui, à l'arrière, constitue un talon (24c) renfermant un noyau (40) en même matière plastique que celle injectée entre les deux chaussons.

17 - Chaussure selon la revendication 16, caractérisée en ce que la semelle du chausson externe (2c) est constituée par une pièce (4c) moulée en matière plastique comportant un rebord (43) faisant saillie vers l'extérieur et sur lequel est cousu le bord inférieur de la tige de ce chausson, et en ce que le bord inférieur de la tige de ce chausson comporte, à l'arrière, une extension (45) formant une sorte de jupe qui est noyée à l'intérieur du bloc moulé (24c) constituant le corps du talon.

Fig:1

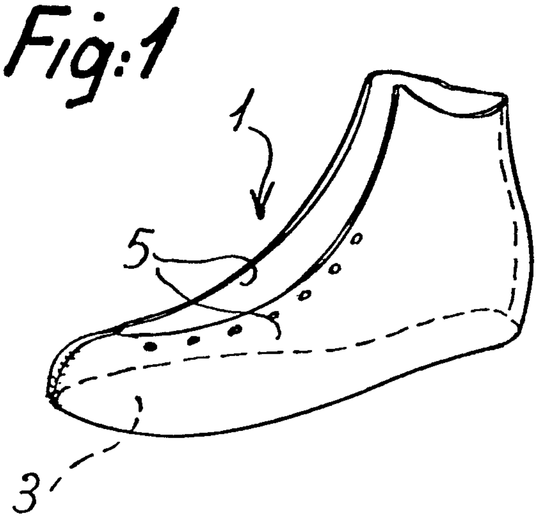


Fig:2

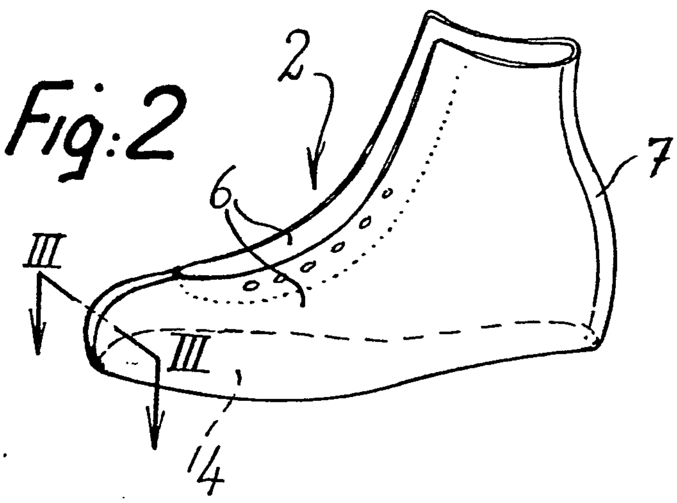


Fig:3

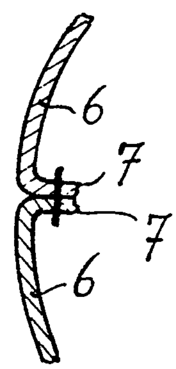


Fig:5

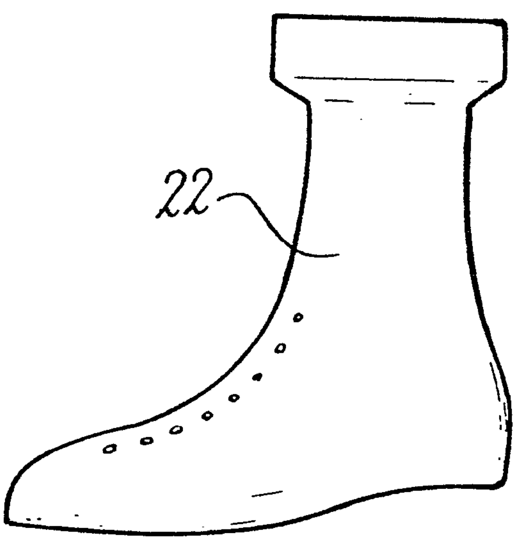

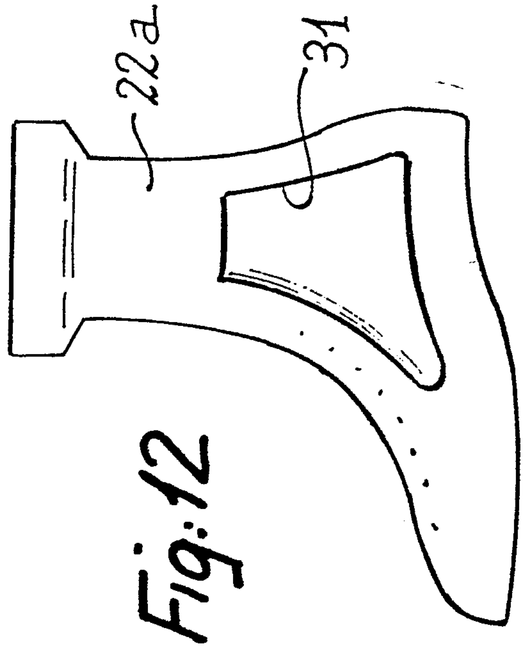


Fig:12

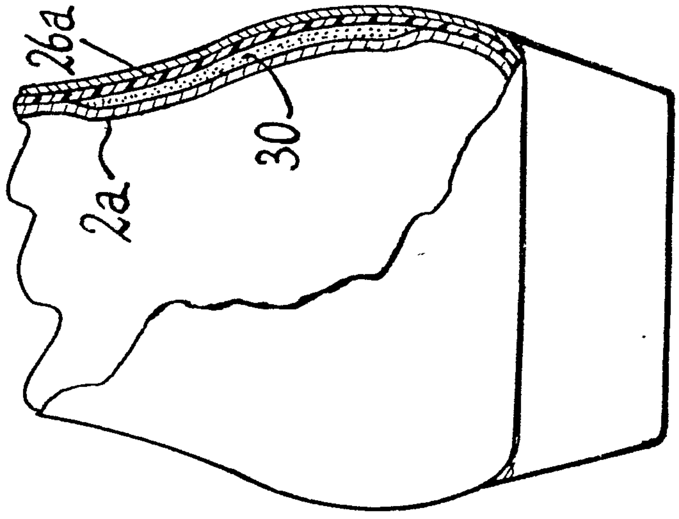


Fig:11

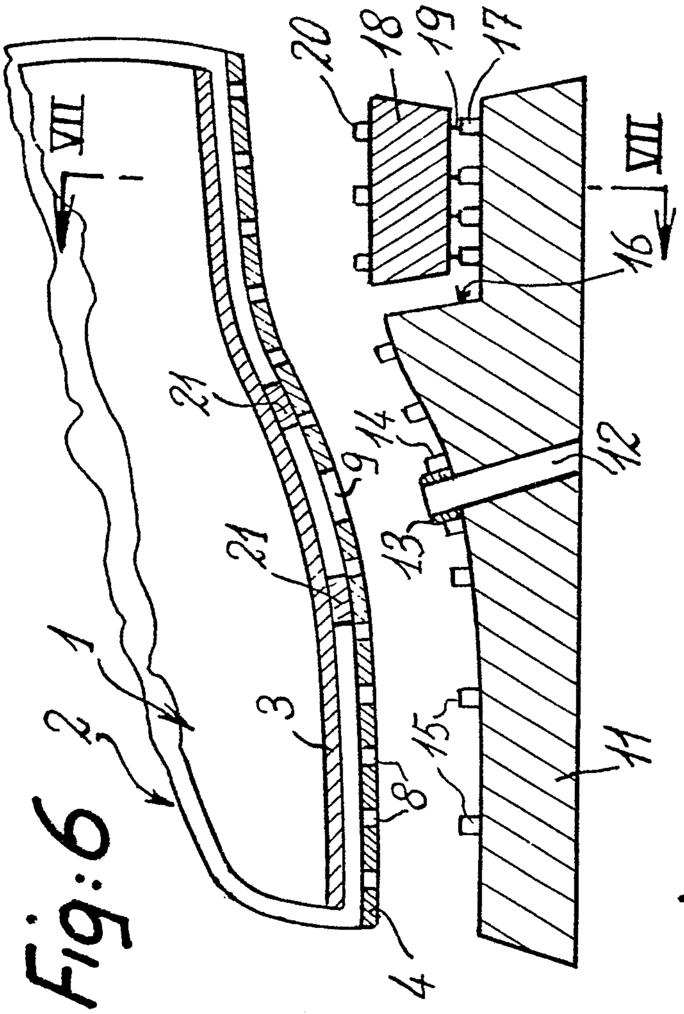


Fig:6

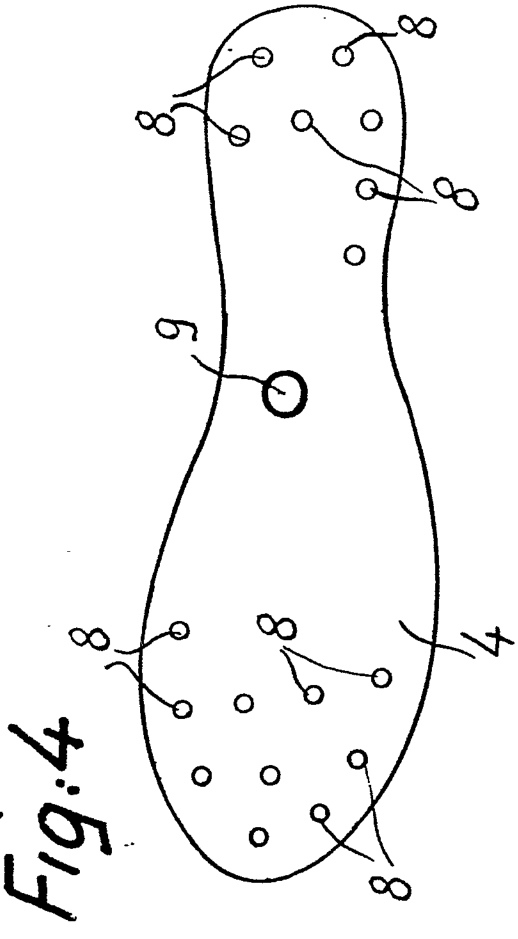


Fig:4

Fig:7

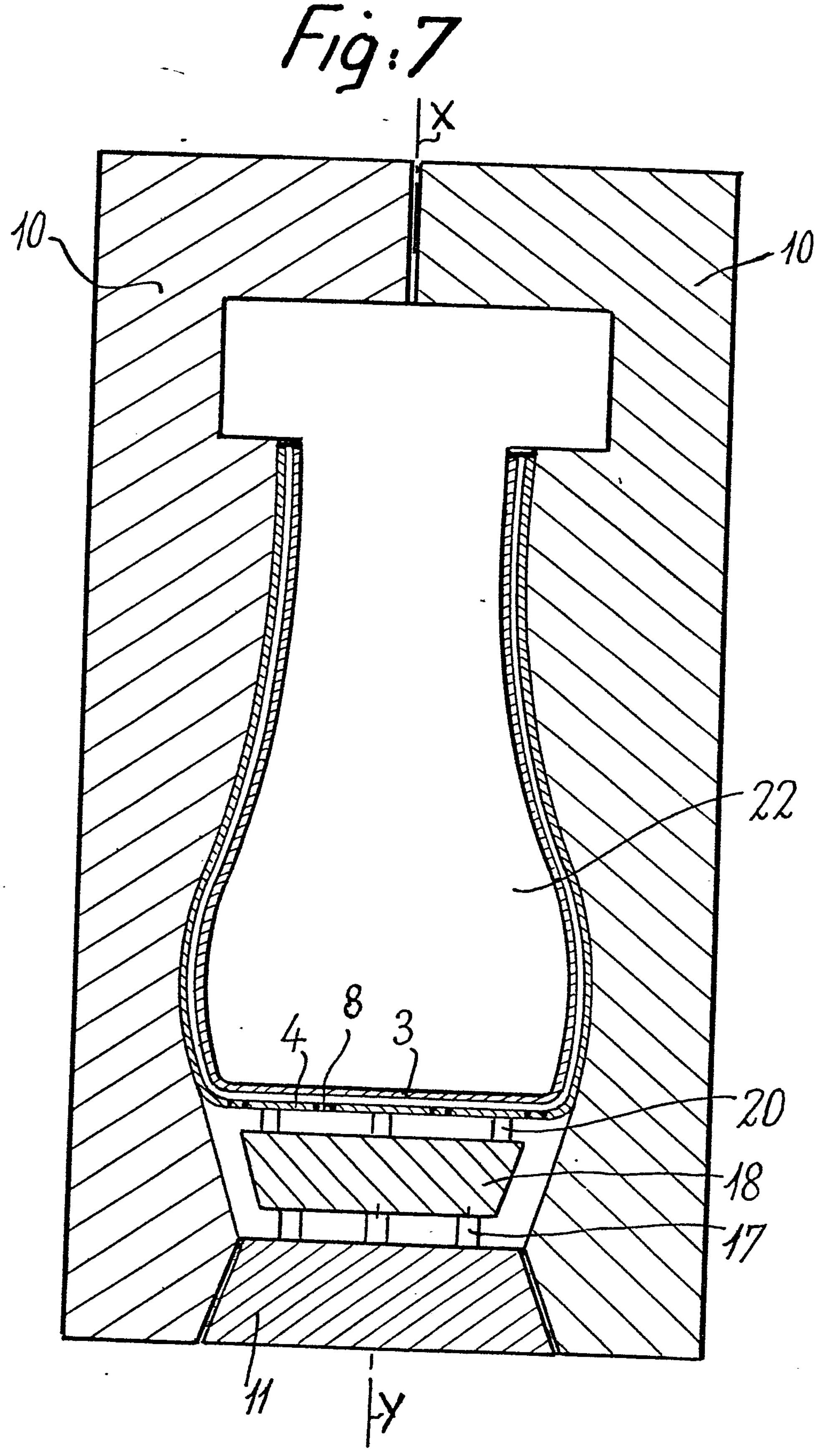

Fig:8

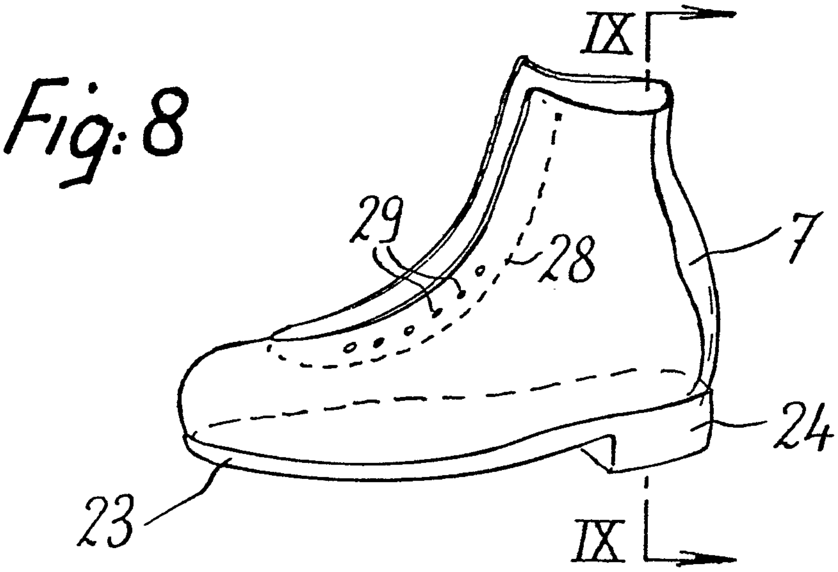


Fig:10

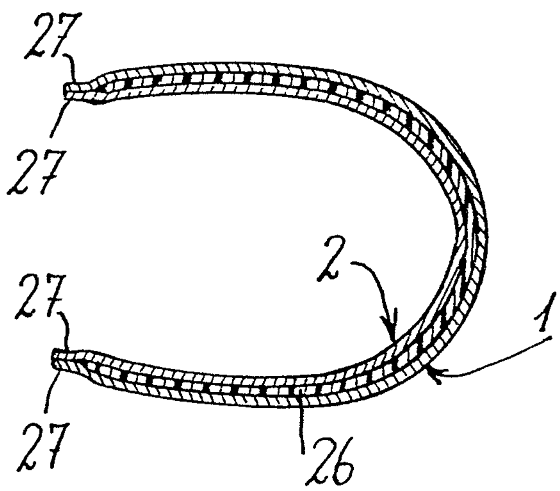


Fig:9

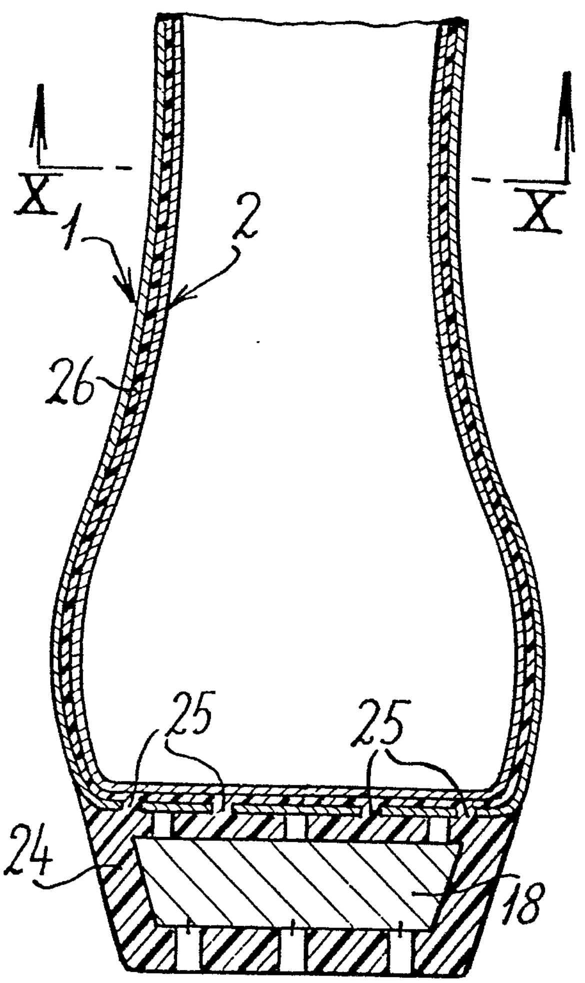

Fig:13

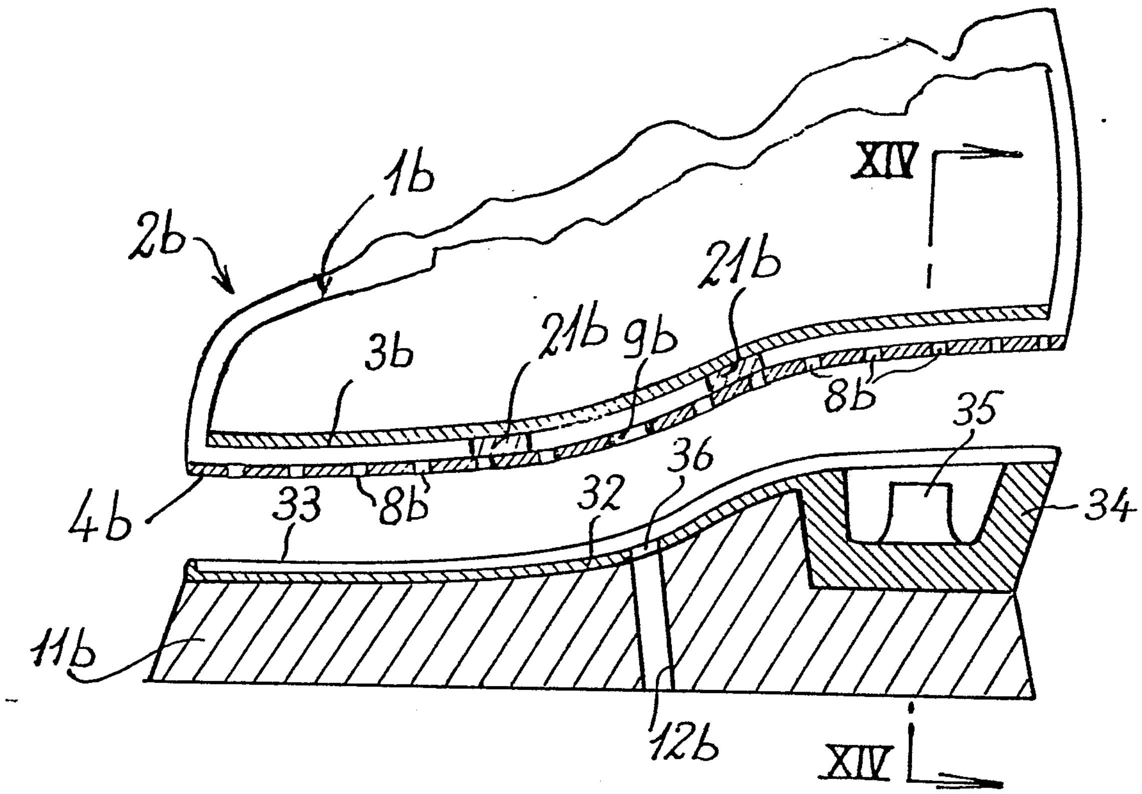

2b
1b
XIV
21b
3b
21b
9b
8b
35
36
4b
33
8b
32
34
11b
12b
XIV


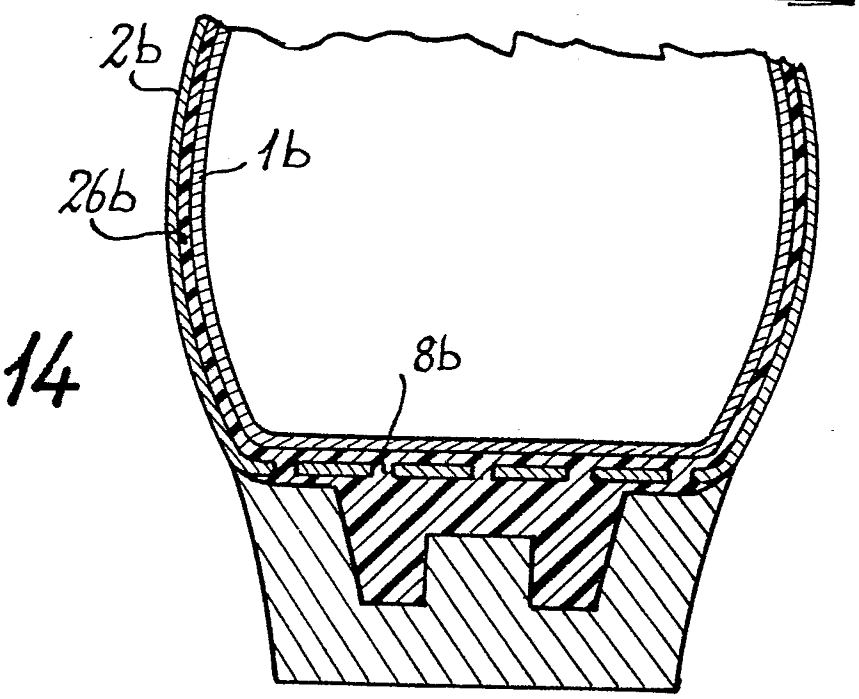

2b
1b
26b
8b


Fig:14

Fig:15

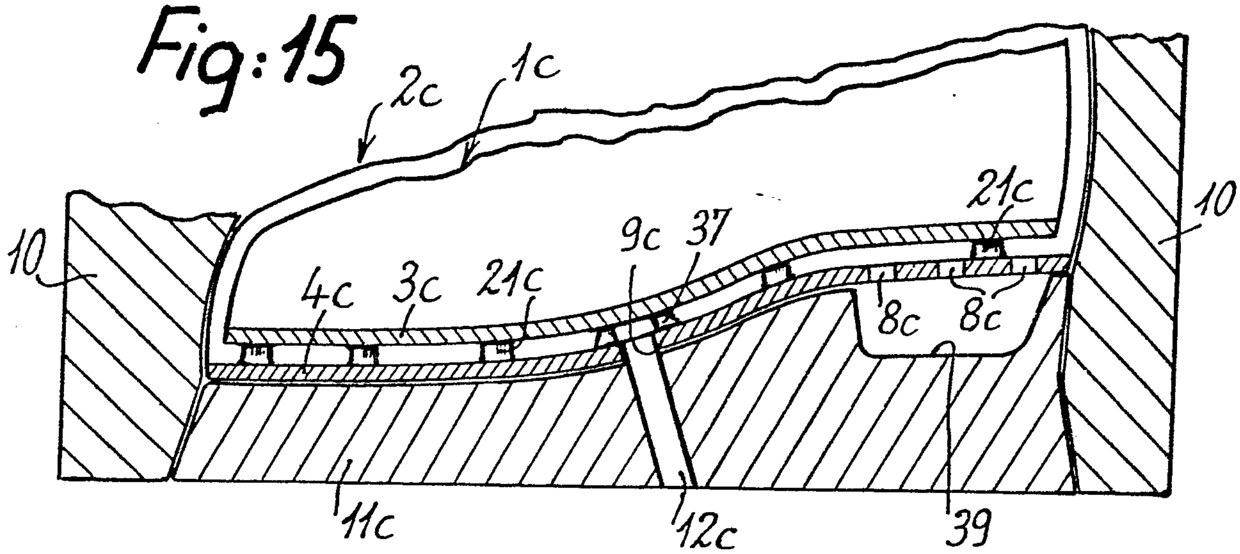


Fig:16

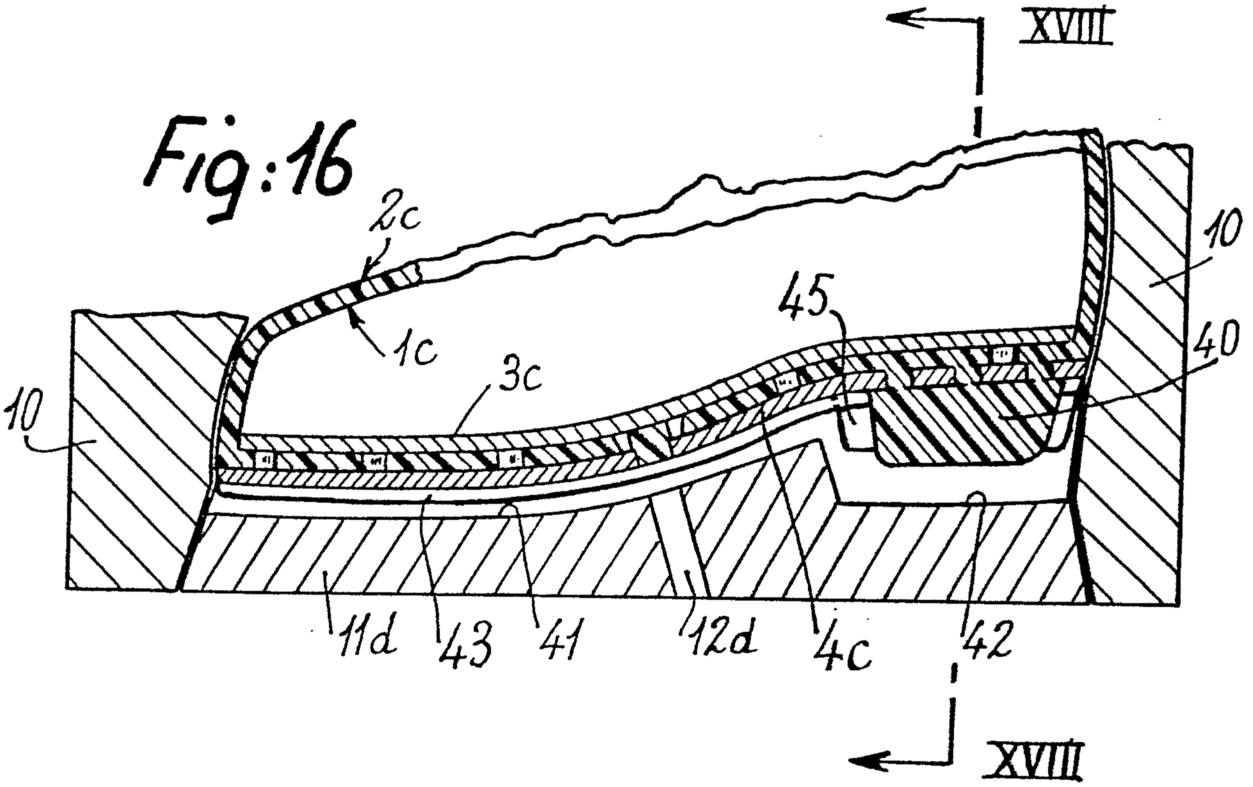


Fig:17

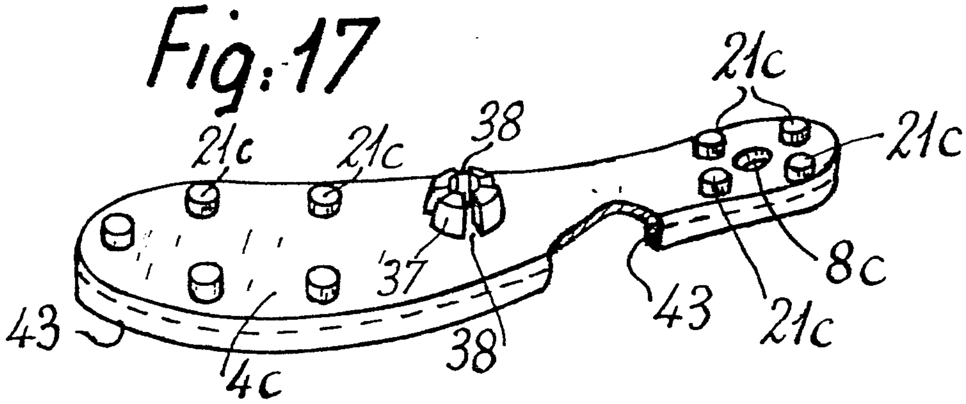

Fig: 18

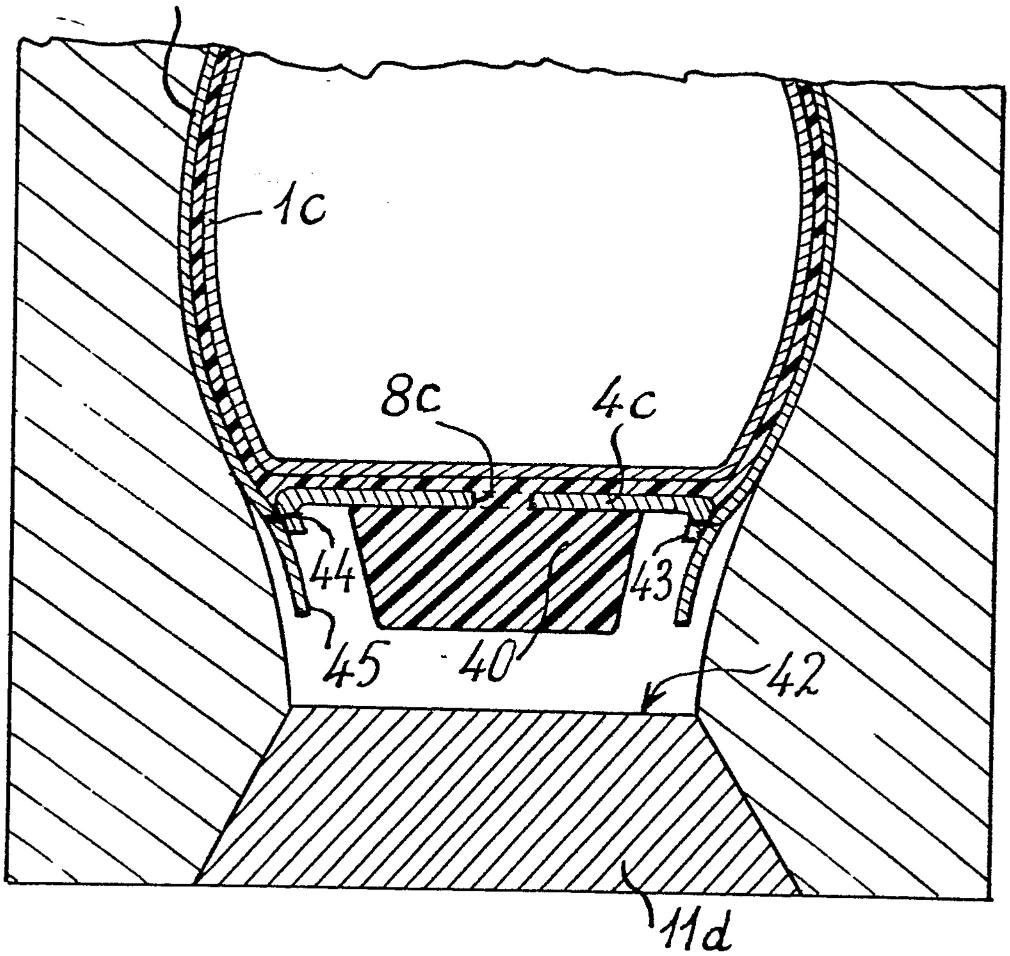


Fig: 19

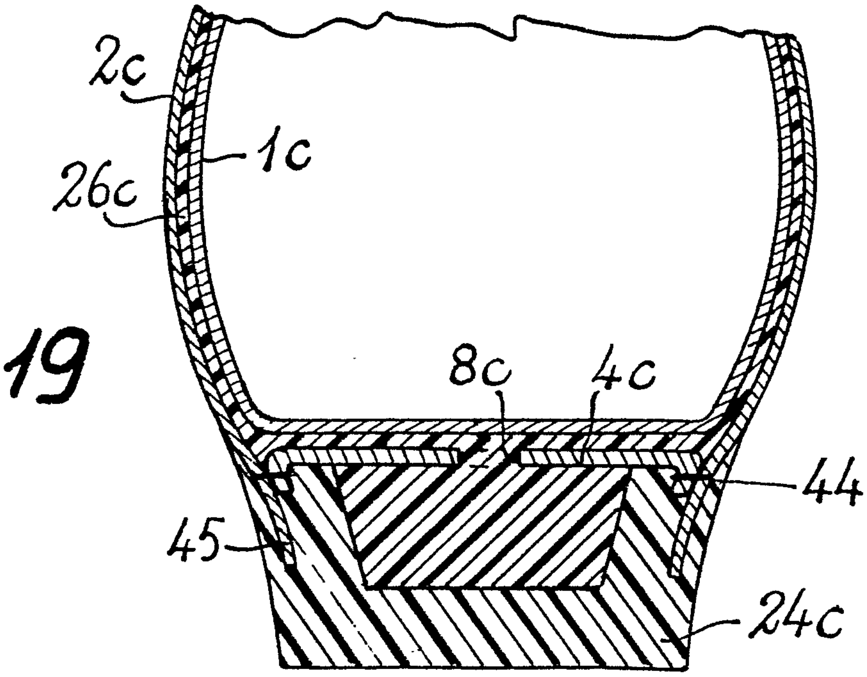

Office européen des brevets

# RAPPORT DE RECHERCHE EUROPEENNE

0161136
Numéro de la demande
EP 85 40 0577

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| D,A | FR-A-1 353 780 (CORCORAN SHOE)<br>* En entier * | 1,10, 13 | B 29 C 45/14<br>A 43 B 5/00<br>B 29 C 45/16 |
| D,A | FR-A-2 339 356 (ROHDE KG SCHUHFABRIKEN)<br>* En entier * | 1,10, 13 | |
| D,A | FR-A-2 493 112 (SALOMON)<br>* En entier * | 1,10, 13 | |
| A | FR-A-2 331 297 (LONDNER)<br>* En entier * | 1,13 | |
| D,A | FR-A-1 580 513 (SOMRVELL)<br>* Page 2, ligne 42 - page 3, ligne 7; figure 1 * | 1,2,13 | DOMAINES TECHNIQUES RECHERCHES (Int. Cl.4) |
| A | FR-A-1 253 975 (JAQUET)<br>* En entier * | 4,5,11 | B 29 C<br>A 43 B |
| A | FR-A-1 350 115 (BAUDOU)<br>* Page 1, colonne de droite, ligne 33 - page 2, colonne de gauche, ligne 3; figures 4,5 * | 9,17 | |

Le présent rapport de recherche a été établi pour toutes les revendications

| Lieu de la recherche | Date d'achèvement de la recherche | Examinateur |
|---|---|---|
| LA HAYE | 01-07-1985 | BOLLEN J.A.G. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire
T : théorie ou principe à la base de l'invention
E : document de brevet antérieur, mais publié à la date de dépôt ou après cette date
D : cité dans la demande
L : cité pour d'autres raisons
& : membre de la même famille, document correspondant

OEB Form 1503 03 82